# EUROPÄISCHE PATENTSCHRIFT

(11) **EP 1 417 894 B1**
(45) Veröffentlichungstag und Bekanntmachung des Hinweises auf die Patenterteilung: **27.06.2007**
(21) Anmeldenummer: 03025491.6
(22) Anmeldetag: 06.11.2003
(51) Int. Cl.: A23K 1/18, A23K 1/00, A23N 17/00

(54) **Verfahren zum Behandeln von Futtermitteln und Füttern von Wiederkäuern**
Process for treatment of fodder for ruminants and method of feeding ruminants
Procédé de traitement de fourrage et méthode de l'alimentation des ruminants

(30) Priorität: 06.11.2002 EP 02024939
(43) Veröffentlichungstag der Anmeldung: 12.05.2004
(73) Patentinhaber: Amandus Kahl GmbH & Co., 21465 Reinbek (DE)
(72) Erfinder: Reichenbach, Heinrich, Dr. Graf von, 21465 Reinbek (DE); Sitzmann, Werner, Dr.-Ing., 21075 Hamburg (DE); Behrmann, Joachim, 21465 Wentorf (DE)
(74) Vertreter: Glawe, Delfs, Moll

(56) Entgegenhaltungen:
- EP-A- 0 777 974
- EP-A- 1 033 078
- GB-A- 2 269 084
- US-A- 5 683 739
- US-A1- 2002 004 098

## Beschreibung

Die Erfindung betrifft ein Verfahren zum Behandeln von eiweißreichen Einzelfuttermitteln, Gesamtfuttermischungen, Futter-Prämixen und Futtermittelkomponenten für Wiederkäuer, insbesondere für Milchkühe, Mastrinder und Schafe für die Erzeugung von Wolle, bei dem das Rohmaterial einer Temperatur von mindestens 80°C mit einer Feuchte von mindestens 15 Prozent vorbehandelt (vorkonditioniert) wird.

Die Milchkuh stellt besondere Anforderungen an ihre Proteinversorgung. Um eine hohe Milchleistung zu erzielen, benötigt sie Eiweißfutterkomponenten, die eine hohe Stabilität gegenüber Abbau und Umwandlung im Pansen besitzen. Ein möglichst hoher Anteil pansenstabilen Proteins soll unabgebaut durch den Pansen zum Darm der Tiere gelangen, in welchem es dann vollständig abgebaut wird und der Milchsynthese zur Verfügung steht. Aufgrund dieser Eigenschaft werden pansenstabile Proteine auch "Bypass-Proteine" genannt - sie umgehen den Abbauschritt im Pansen und vollziehen diesen erst im Darmtrakt.

Die verschiedenen Futterkomponenten weisen unterschiedlich rasch im Pansen abbaubare Proteinanteile auf. Auch wird die Pansenstabilität von Proteinen durch manche verfahrenstechnische Prozesse gesteigert; z.B. bei Rapssaat oder Sojabohnen durch die Wärmeeinwirkung bei der Ölextraktion. Daher sind Extraktionsschrote sehr geschätzte Eiweißfutterkomponenten für Milchviehfutter.

Die Milchleistung der Hochleistungskühe jedoch macht mittlerweile besonders hohe Bypassprotein-Konzentrationen im Futter notwendig. Daher suchte die Futtermittelindustrie nach Möglichkeiten, die Pansenstabilität der Proteinfraktion in Futtermitteln künstlich zu erhöhen.

Mittlerweile ist ein Verfahren gebräuchlich, bei welchem Eiweißfuttermittel - unter Zusatz von Katalysatoren - hydrothermisch behandelt, d.h. längere Zeit feuchtheiß bei Siedetemperatur geröstet werden (US 6 221 380). Hauptkritikpunkte dieser Verfahren sind eben diese Katalysatoren, zum einen das als krebserregend bekannte Formaldehyd, oder alternativ das Lignosulfonat, ein Abfallstoff aus der Papierherstellung.

Es ist zwar bekannt, Futtermittel hydrothermisch zu behandeln, um den im Pansen der Kuh nicht verdaubaren Kohlehydratanteil, insbesondere Stärkeanteil durch Behandlung bei erhöhter Temperatur zu erhöhen (EP 1 033 078 A1). Der Einsatz von Katalysatoren wird dabei nicht erwähnt. Ein solches Verfahren ist natürlich bei kohlehydratreichen Futtermitteln zweckmäßig. Bei eiweißreichen Futtermittteln wäre es dagegen erstrebenswert, den im Pansen der Kuh nicht verdaubaren Proteinanteil noch weiter zu erhöhen, obwohl natürlich bei eiweißreichen Futtermitteln ohnehin ein höherer Anteil zu erwarten ist. Dazu gibt die Entgegenhaltung keinerlei Hinweise.

Die Aufgabe der Erfindung besteht in der Schaffung eines Verfahren, mit dem der Anteil des Bypassproteins in eiweißreichen Futtermitteln erhöht werden kann. Eine weitere Aufgabe der Erfindung besteht in der Schaffung eines Verfahrens zum Füttern von Wiederkäuern.

Eine Lösung besteht darin, dass das Material nach der Vorkonditionierung einer erhöhten Temperatur von mindestens 100°C ausgesetzt wird.

Das Material wird also nicht unmittelbar nach dem Austreten aus dem Vorkonditionierer abgekühlt, sondern noch für eine gewisse Zeit auf einer erhöhten Temperatur gehalten.

Vorteilhafterweise wird bei der Vorbehandlung das Rohmaterial auf einen Feuchtegehalt von ungefähr 15 % bis 25 %, insbesondere ungefähr 17 % bis 20 % eingestellt. "Feuchtegehalt" bedeutet dabei Gewichtsprozent Wasser des gesamten Materials.

Dabei wird das Material nach dem Vorkonditionieren in einem Expander auf mehr als 100°C erwärmt und komprimiert und nach dem Austreten aus dem Expander für ca. 3 bis 20 Minuten auf einer Temperatur von ungefähr 80°C gehalten.

In einem Expander wird das Material mit einer Förderschnecke oder anderem Förderelement gegen eine enge Austrittsöffnung gepreßt. Dabei wird es durch Reibung (und ggf. durch Dampfzugabe und/oder Heizen) erwärmt. Am Austragsende bildet sich durch den Förderdruck der Förderschnecke ein erhöhter Druck, so dass hier das Wasser erst bei einer Temperatur von mehr als 100°C verdampft. Tritt das Material durch die enge Austragsöffnung aus, so verdampft das Wasser schlagartig, und das Erzeugnis bläht sich auf. Ein solcher Expander ist in EP 0 331 207 B1 beschrieben.

Das Material wird also nicht, wie dies sonst üblich ist, unmittelbar nach dem Austreten aus dem Expander gekühlt, etwa auf einem Bandkühler, sondern wird noch für eine gewisse Zeit auf einer erhöhten Temperatur gehalten. Dadurch erhöht sich überraschenderweise der Anteil der Bypass-Proteine.

Vorteilhafterweise wird das Material ungefähr 10 Minuten auf der Temperatur von mehr als ungefähr 80°C gehalten. Dies kann einerseits dadurch geschehen, dass das Material nach dem Austreten aus dem Expander in einer wärmeisolierten Umschließung gehalten wird, z.B. in wärmeisolierten Behältern oder wärmeisolierten Säcken. Das Material wird zwar im Expander durch die Reibung und ggf. Dampfzugabe auf mehr als 100°C erwärmt. Beim Austreten aus dem Expander verdampft aber schlagartig Wasser, so dass die Temperatur auf etwas unter 100°C absinkt. Verbringt man das Material nun in eine wärmeisolierte Umschließung, so wird die Temperatur während einiger Zeit, zumindest während 10 Minuten, auf über 80°C bleiben.

Bei einer anderen vorteilhaften Ausführungsform ist vorgesehen, dass das Material nach dem Austreten aus dem Expander in einem hydrothermischen Reaktor auf eine Temperatur von ca. 100°C erwärmt und auf dieser Temperatur gehalten wird. In einem solchen hydrothermischen Reaktor kann dadurch eine etwas höhere Temperatur erzielt werden, als wenn das Material nach dem Austreten aus dem Expander einfach in eine wärmeisolierte Umschließung verbracht wird.

Hier und in den Ansprüchen wird ein hydrothermischer Reaktor besonders hervorgehoben. Statt dessen können aber auch andere Geräte verwendet werden, die ähnliche Wirkungen zeigen, wie z. B. ein dampfbeheiztes Bandgerät oder ein Gerät mit einer großen Dampfmisch- und Verweilschnecke. Wichtig ist beim erfindungsgemäßen Verfahren das Warmhalten bzw. Erwärmen des Expandats für eine gewisse Zeitdauer nach dem Expandieren.

Die Erwärmung in hydrothermischen Reaktor erfolgt zweckmäßigerweise durch Dampfzugabe und durch Beheizen des Reaktors.

In einem Expander können Temperaturen bis ungefähr 170°C, insbesondere bis 150°C erreicht werden. Für das erfindungsgemäße Verfahren hat sich aber eine Temperatur von ungefähr 130°C als besonders vorteilhaft erwiesen.

Zweckmäßigerweise, aber nicht notwendigerweise, wird nach der hydrothermischen Behandlung eine Pelletierung durchgeführt.

Die erfindungsgemäße Wirkung beruht auf dem kombinierten Einfluß von Temperatur, Dampfüberdruck und hohem mechanischen Druck sowie intensiven Scherkräften im Expander und der anschließenden hydrothermischen Behandlung. Aufgrund seiner geringen Restfeuchte läßt sich das fertige Futtermittel bereits durch Kühlung mit Umgebungsluft trocknen. Zusätzliche Heizenergie ist hierfür in den meisten Fällen nicht erforderlich.

Bei einer anderen Ausführungsform des erfindungsgemäßen Verfahrens wird auf einen Expander verzichtet. Die an die Vorkonditionierung anschließende Behandlung wird dabei bei Atmosphärendruck und einer Temperatur von ungefähr 100°C während mindestens einer Stunde durchgeführt.

Die Behandlungszeit kann dabei auf ungefähr 5 bis 20 Minuten bei einer anderen vorteilhaften Ausführungsform reduziert werden, wenn die an die Vorkonditionierung anschließende Behandlung bei einem Überdruck von ungefähr 1 bis 2 bar, was einer Temperatur von 114°C bis 133°C entspricht, durchgeführt wird. Als besonders vorteilhaft hat es sich dabei erwiesen, wenn die anschließende Behandlung während ungefähr 10 bis 15 Minuten durchgeführt wird.

Zweckmäßigerweise, aber nicht notwendigerweise, wird nach der oben beschriebenen Behandlung bei erhöhter Temperatur eine Pelletierung durchgeführt. Diese erfolgt in einer Pelletpresse, wie sie ebenfalls in EP 0 331 207 B1 beschrieben ist. Das Material wird dabei durch Kollerrollen durch enge Bohrungen einer Matrize gepreßt und dabei zu Pellets verdichtet. Die Pelletierung bringt den Vorteil mit sich, die Schüttdichte zu erhöhen und damit die Transportkosten zu senken, insbesondere wenn vorzerkleinertes Extraktionsschrot verarbeitet wird. Wesentlich ist es, dass in vielen Fällen eine Zerkleinerung der Futtermittel zweckmäßig ist, insbesondere bei der Verarbeitung von Gesamtfuttermischungen oder Futtermittelkomponenten, welche zusätzlich höhere Stärkeanteile enthalten. Je nach Rohmaterial wird man unzerkleinerte Körner verwenden, die natürlich den Vorteil mit sich bringen, dass die Verdauungssäfte im Pansen die Stärke nicht so leicht aufschließen können. In anderen Fällen haben diese unzerkleinerten Körner aber den Nachteil, dass im Dünndarm die Stärke nicht vollständig in Glukose umgewandelt werden kann. Es kann daher zweckmäßig sein, wenn die Körner angebrochen oder gequetscht werden. Die Zerkleinerung der Körner kann dabei in einer Hammermühle stattfinden. Als besonders zweckmäßig hat sich für diese Aufgabe ein Walzenstuhl erwiesen. Dabei muß aber generell berücksichtigt werden, dass die Stärkekörner möglichst wenig geschädigt werden.

Vorteilhafterweise wird das Material nach der Behandlung auf eine Feuchte von weniger als ungefähr 10 % getrocknet. Dies geschieht möglicherweise, insbesondere wenn ein Expander oder eine Pelletpresse verwendet wird, bereits selbsttätig bei der Abkühlung. In anderen Fällen muß allerdings noch eine Trocknung mit warmer Luft durchgeführt werden.

Das Material, das bei dem erfindungsgemäßen Verfahren verwendet wird, muß wie erwähnt eiweißreich sein. Es hat sich dabei als besonders vorteilhaft erwiesen, wenn das Ausgangsmaterial Sojaextraktionsschrot, Rapsextraktionsschrot und/oder Baumwollsaatschrot enthält. Dabei beträgt vorteilhafterweise der Schrotanteil des Ausgangsmaterials mindestens ungefähr 80 %. Bei einer ebenfalls vorteilhaften Ausführungsform beträgt der Schrotanteil mindestens ungefähr 50 %.

Andere vorteilhafte Ausgangsmaterialien zeichnen sich dadurch aus, dass sie Rapsexpeller, DDGS (Rinder-Kraftfutter), Extraktionsschrote und/oder Vollfettsoja enthalten. Vorteilhafterweise enthält dabei das Ausgangsmaterial mindestens ungefähr 80 % an Schrot, Rapsexpeller, DDGS und/oder Vollfettsoja.

Ein vorteilhaftes Verfahren zum Füttern von Wiederkäuern, insbesondere von Milchkühen, Mastrindern und Schafen zeichnet sich dadurch aus, dass zum Füttern ein Futtermittel verwendet wird, das wie vorstehend beschrieben hergestellt ist. Es versteht sich von selbst, dass, wenn das Material unmittelbar nach der Behandlung eine höhere Temperatur hat, das Futtermittel vor dem Verfüttern noch abgekühlt werden muß.

Die Erfindung wird im folgenden anhand von vorteilhaften Ausführungsformen unter Bezugnahme auf die beigefügten Zeichnungen beschrieben. Es zeigen:
- Fig. 1: schematisch eine Anlage zur Durchführung des Verfahrens des Standes der Technik; und
- Fig. 2: schematisch eine Anlage, die für ein erfindungsgemäßes Verfahren verwendet werden kann.

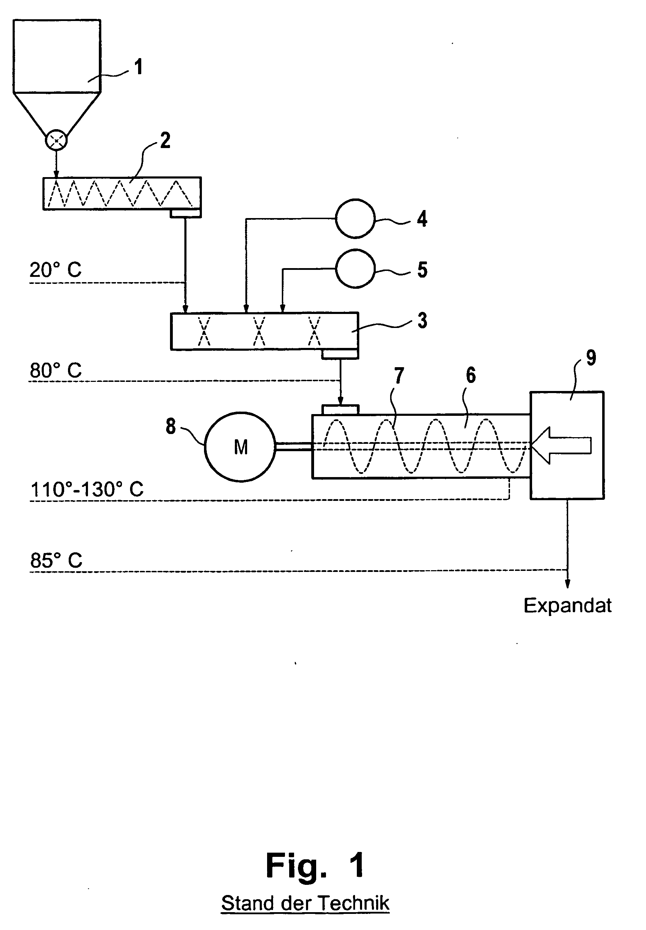

Bei der Anlage des Standes der Technik der Fig. 1 wird das Einzelfuttermittel oder die Futtermittelmischung aus einem Vorratsbehälter 1 über einen Förderer 2 in einen Kurzzeit-Konditionierer 3 gefördert, in dem das Material mittels Dampf 4 oder zusätzlich noch mittels Flüssigkeit 5 befeuchtet und erwärmt wird. Die Temperatur von typischerweise 20°C steigt dabei auf 80°C. Anschließend wird das Material dann in einen Expander 6 verbracht, der in einem rohrförmigen Gehäuse eine Förderschnecke 7 aufweist, die durch einen Motor 8 angetrieben wird. Das Material wird dabei gegen eine Auslaßöffnung gefördert, die durch ein Gegendruckelement 9 wenigstens teilweise verschlossen ist. Durch die intensive mechanische Bearbeitung und Reibung und ggf. durch weitere Dampfzugabe steigt dabei die Temperatur des Materials auf typischerweise 110°C bis 130°C an. Beim Verlassen des Expanders entspannt sich der Druck spontan auf Atmosphärendruck, so dass überhitztes Wasser schlagartig verdampft, wodurch das Expandat den Expander 6 mit einer Temperatur von typischerweise 85°C verläßt.

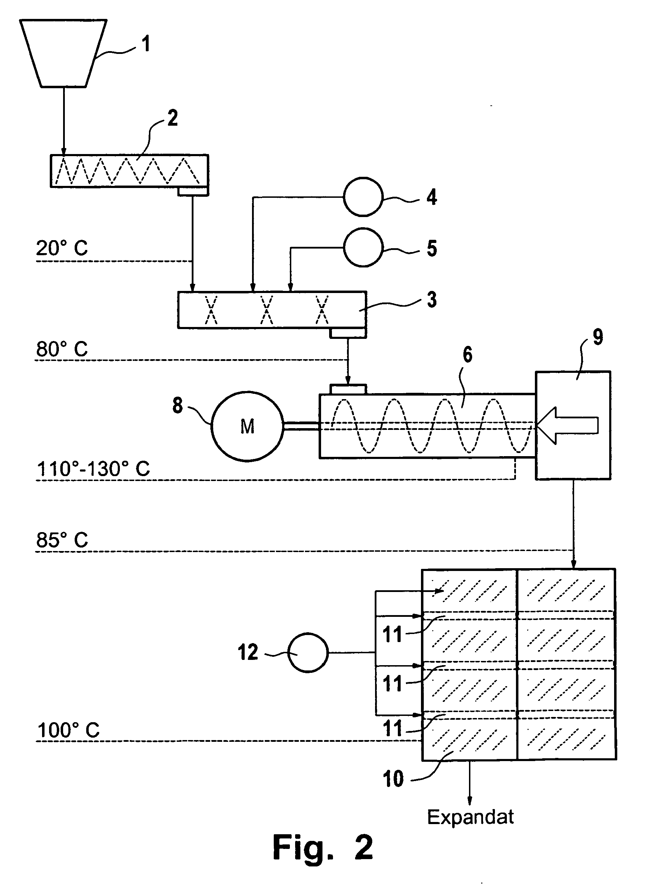

Die erfindungsgemäße Anordnung der Fig. 2 unterscheidet sich von derjenigen der Fig. 1, indem sich an den Expander 6 ein hydrothermischer Reaktor 10 anschließt, in dem das Material auf mehreren Böden 11 für eine gewisse Zeit, vorzugsweise ca. 3 bis 20 Minuten, insbesondere 10 Minuten zwischengelagert wird. In die Böden 11 und in den Raum des hydrothermischen Reaktors 10 wird bei 12 Dampf eingeblasen, um das Material auf eine Temperatur von ungefähr 100°C zu erwärmen und auf dieser Temperatur zu halten. Zusätzlich sollte der hydrothermische Reaktor 10 auch beheizt werden.

Statt des hydrothermischen Reaktors 10 kann auch ein wärmeisolierter Behälter, Sack oder dergleichen (nicht gezeigt) verwendet werden, um das Material nach dem Austreten aus dem Expander noch für eine gewisse Zeit, vorzugsweise ungefähr 10 Minuten auf einer Temperatur von über 80°C zu halten.

Es wurden verschiedene Versuche mit dem erfindungsgemäßen Verfahren durchgeführt. Dabei wurde der mechanische Energieeintrag in das Produkt im Expander in drei Stufen verändert. Entsprechend variierte die maximale Behandlungstemperatur im Expander in drei Stufen von 110°C, 120°C und 130°C. Bei anderen Versuchen wurde nur die Temperaturstufe 130°C im Expander verwendet. Es wurden sowohl Raps- als auch Soja-Extraktionsschrot sowohl für sich als auch in einer Mischung im Verhältnis 1:1 behandelt. Die Bypass-Protein-Analyse umfaßt dabei die Bestimmung der UDP₂-, UDP₅- und UDP₈-Werte. Der UPD-Wert gibt dabei an, welcher Anteil des Gesamtproteins im Pansen nicht abgebaut wird, wenn die Gesamtfuttermenge im Pansen eine Passagerate in den Darmtrakt - ausgedrückt in Prozent - aufweist, die durch den Index 2, 5 oder 8 angegeben ist. UDP₅ beispielsweise besagt, dass der Gehalt an pansenstabilem Protein sich auf eine Pansen-Passagerate des Gesamtfutters von 5 % pro Stunde bezieht. Hier geht man davon aus, dass das Tier stündlich 5 % des Panseninhalts an den Dünndarm weitergibt. Bei Hochleistungstieren, die weitaus mehr Futter als leistungsschwache Tiere benötigen und aufnehmen, ist die Passagerate (trotz eines für gewöhnlich größer entwickelten Pansens) deutlich höher - d. h., dass z. B. 8 % des Panseninhalts stündlich in den Dünndarm fließen (UDP-Wert daher = UDP₈).

Das insgesamt nutzbare Protein, d.h. Bypass-Protein plus im Pansen erzeugtes mikrobielles Protein wird als nutzbares Rohprotein (nXP), wieder mit dem Index als Bezugsangabe für die Pansen-Passagerate des Gesamtfutters, in Gramm pro kg Trokkenmasse angegeben.

"PDI" steht für "Protein Dispersibility Index" und bezeichnet den Anteil des wasserlöslichen Proteins am Gesamtprotein (in angloamerikanischen Ländern wird die Löslichkeit des Proteins in Kalilauge KOH zugrundegelegt). Ein verringerter PDI-Index läßt Rückschlüsse auf eine Verringerung der ruminalen Abbaubarkeit der Proteine zu. PDI-Messungen dienen unter anderem zur Untermauerung der Aussagen von UDP-Analysen (bei anderen Verfahren wie z. B. der Behandlung von Vollfettsoja ermöglicht die PDI-Bestimmung Rückschlüsse auf eventuelle Schädigung von Aminosäuren.

Das Rohmaterial wurde im Vorkonditionierer 3 auf einen Feuchtegehalt von ungefähr 18 % bis 19 % eingestellt.

Tabelle 1 gibt die Behandlungsparameter und Analysewerte für die Mischung von Soja- und Rapsextraktionsschrot wieder:
- Zeile 1 teilt die Behandlungen in die drei Behandlungsvarianten A, B und C sowie in die Kontrollvariante (= Rohware ohne Behandlung) ein.
- Zeile 2 zeigt die verschiedenen Temperaturstufen jeder dieser Behandlungsvarianten.
- Zeile 3 gibt die UDP₅-Werte, in Gramm pro Kilogramm Gesamtprotein, wieder.
- Zeile 4 zeigt die Menge des nutzbaren Gesamtproteins, in Gramm pro kg Trockenmasse, an.
- Zeile 5 enthält Angaben zur Proteinlöslichkeit in Wasser.

Die Analysen wurden durch das Institut für Tierernährung, Tierphysiologie u. Stoffwechsel der Christian-Albrechts-Universität, Kiel sowie durch die IFF Internationale Forschungsgemeinschaft Futtermittel, Braunschweig, vorgenommen.

Der UDP-Ausgangswert der unbehandelten Rohware lag mit 325 g pro kg Gesamtprotein bereits recht hoch. Die Proteinlöslichkeit (PDI) der Rohware im Wasser war mit 13,3 % gering. Die Behandlungsvariante A betraf dabei eine Behandlung in der Anlage der Fig. 1, in der sich an den Vorkonditionierer 3 der Expander 6 anschloß und das dabei entstehende Expandat geprüft wurde.

Eine Expandierung mit moderatem mechanischem Energieeintrag, der zu einer maximalen Behandlungstemperatur von nur ca. 110°C führte, bewirkte eine geringe, aber deutliche Steigerung des UDP₅-Wertes auf 354 g/kg XP. Dies spiegelt sich sowohl im deutlichen Abfall der Proteinlöslichkeit auf 8,6 %, als auch im Anstieg des Anteils nutzbaren Gesamtproteins am Dünndarm auf 274 g/kg (nXP) wider. Die Steigerung der Behandlungstemperatur auf max. 120°C durch höheren mechanischen Energieeintrag bewirkte einen beträchtlichen Anstieg des UDP₅-Wertes auf 429 g/kg; dies entspricht immerhin rund 25 % mehr Bypass-Protein als in der unbehandelten Rohware. Entsprechend stieg die nXP₅-Rate ebenfalls deutlich auf 300 g/kg. Die Abnahme der Proteinlöslichkeit hingegen war gering.

**Tabelle 1**

| **Behandlung** | **Kont.** | | **A** | | **B** | **C** |
|---|---|---|---|---|---|---|
| **Temperaturstufe (°C)** | - | 110 | 120 | 130 | 130 | 130 |
| **UDP₅ (g/kg XP)** | 325 | 354 | 429 | 427 | 463 | 539 |
| **nXP₅ (g/kg dm)** | 265 | 274 | 300 | 298 | 315 | 336 |
| **PDIwater (%)** | 13,3 | 8,6 | 8,3 | 8,0 | 7,5 | 6,8 |

Eine weitere Steigerung der Behandlungstemperatur auf 130°C brachte zunächst keinerlei Veränderung. Alle Analysewerte entsprachen nahezu denen der 120°-Stufe. Wegen der Einzelheiten, wie solche Messungen vorgenommen werden, wird auch auf den Stand der Technik (EP 1 033 078 A1) verwiesen.

Bei der Behandlung B wurde, wie dies ebenfalls aus dem Stand der Technik bekannt ist, vor dem Expander noch eine vorherige Konditionierung von ungefähr 10 Minuten bei ungefähr 100°C vorgenommen. Man erkennt, dass dadurch eine Erhöhung der UDP- und nXP-Werte erzielt und eine Verringerung der Wasserlöslichkeit der Proteinfraktion erreicht wird.

Die Behandlung C zeigt nun die Ergebnisse der erfindungsgemäßen Behandlung, bei der das Rohmaterial nicht der Konditionierung von 10 Minuten vor dem Expander gemäß Behandlung B ausgesetzt wird, sondern die hydrothermische Behandlung während ungefähr 10 Minuten bei 100°C erst nach dem Expander stattfindet. Das erfindungsgemäße Verfahren zeigt dabei durch einfaches zeitliches Vertauschen der hydrothermischen Behandlung und der Behandlung im Expander eine beträchtliche Erhöhung des UDP₅-Wertes, des nXP₅-Wertes und eine Verringerung der Wasserlöslichkeit. Der UDP₅-Wert war bei der erfindungsgemäßen Behandlung "C" rund 60 % höher als derjenige der unbehandelten Rohwarenmischung.

Während Tabelle 1 Meßwerte für eine Soja/Raps-Extraktionsmischung zeigt, zeigt Tabelle 2 Werte für Raps-Extraktionsschrot.

**Tabelle 2**

| **Behandlung** | **Kont.** | | **A** | | **B** | **C** |
|---|---|---|---|---|---|---|
| **Temperaturstufe (°C)** | - | 110 | 120 | 130 | 130 | 130 |
| **UDP₅ (g/kg XP)** | 495 | | | 551 | 548 | 615 |

Tabelle 3 zeigt die Ergebnisse für Soja-Extraktionsschrot:

**Tabelle 3**

| **Behandlung** | **Kont.** | | **A** | | **B** | **C** |
|---|---|---|---|---|---|---|
| **Temperaturstufe (°C)** | - | 110 | 120 | 130 | 130 | 130 |
| **UDP₅ (g/kg XP)** | 180 | | | 362 | 405 | 415 |

Der UDP-Ausgangswert des unbehandelten Rapsschrotes lag bei 495 g/kg XP erstaunlich hoch. Anzunehmen ist daher, dass bei der Extraktion mit sehr hohen Rösttemperaturen und/oder langer Röstdauer gearbeitet wurde. Die Expandierung in Behandlungsvariante A steigerte diesen hohen Ausgangswert auf 551 g/kg; in Behandlungsvariante B auf annähernd dasselbe Niveau und in der erfindungsgemäßen Variante C auf den Höchstwert von 615 g/kg. Somit ergibt sich hier ein sehr ähnliches Bild der Analysewerte wie bei der Behandlung der Raps- und SojaschrotMischung.

Der UDP-Ausgangswert des unbehandelten Sojaschrotes hingegen (Tab. 3) ist mit 180 g/kg XP sehr gering. Die Expandierung in Behandlungsvariante A steigerte den Wert auf 362 g/kg; der UDP-Wert wurde verdoppelt. In Variante B stieg der Wert auf 405 g/kg an. Anders als bei der Mischung oder bei Rapsschrot allein, erbrachte gegenüber der Variante A hier die Variation des Behandlungsverfahrens eine Steigerung. In Variante C stieg der Wert auf 415 g/kg an. Der UDP-Wert konnte hier also weit mehr als verdoppelt werden.

**Tabelle 4**

| **Behandlung** | **Kont.** | **A** | **B** | **C** |
|---|---|---|---|---|
| **Behandlungstemperatur** | - | 130°C | 130°C | 130°C |
| **UDP₅ (g/kg XP)** | 389 | 440 | 587 | 453 |
| **UDP₂ (g/kg XP)** | 195 | 226 | 354 | 229 |
| **UDP₈ (g/kg XP)** | 492 | 549 | 688 | 566 |

Tabelle 4 zeigt Meßwerte, die mit Raps-Extraktionsschrot erzielt wurden. Die Behandlungen A und C entsprechen dabei den Behandlungen der Tabellen 1 bis 3, während bei der Behandlung D statt der Erwärmung und Warmhaltung im hydrothermischen Reaktor der Behandlung "C" eine 10-minütige Aufbewahrung des über 80°C warmen Expandats in wärmeisolierten Säcken erfolgte. Man sieht hier ebenfalls gegenüber dem Verfahren A des Standes der Technik eine gewisse Verbesserung. Die wesentliche Verbesserung erhält man aber durch das erfindungsgemäße Behandlungsverfahren C, bei dem nach dem Expander das Material während ungefähr 10 Minuten in einem hydrothermischen Reaktor auf eine Temperatur von 100°C erwärmt und auf dieser Temperatur gehalten wird. Man erhält so eine ganz beträchtliche Verbesserung gegenüber dem Verfahren des Standes der Technik.

Bedampfung nach Expandierung hebt die Temperatur des Frischexpandats von ca. 90°C auf 100°C an, wodurch sich die Produktfeuchte um ca. 0,7 Gew.-% erhöht. Der größte Teil dieser zusätzlichen Feuchte verdampft anschließend beim Kühlen des fertigen Produkts. Insbesondere bei Grobschülpigkeit ist aber zum Erreichen der Endfeuchte nach dem Kühlvorgang noch ein zusätzlicher Trocknungsvorgang erforderlich.

Wie dies bereits erwähnt wurde, kann auf einen Expander verzichtet werden. Das Material wird dazu entweder längere Zeit (ungefähr mindestens eine Stunde) bei Atmosphärendruck auf einer Temperatur von 100°C gehalten, oder aber es wird bei leicht erhöhtem Druck von ungefähr 1 bis 2 bar ungefähr 5 bis 20 Minuten behandelt.

Die Erhöhung des nicht im Pansen verdaubaren Proteins (UDP₅-Gehalt) bei den verschiedenen erfindungsgemäßen Behandlungsverfahren wurde experimentell untersucht. Die Ergebnisse sind in der folgenden Tabelle 5 angegeben.

**Tabelle 5**

| **Expander mit Nachkonditionierung** | | | **Langzeit-Konditionierverfahren (atmosphärisch)** | | | **Dampfdruck-Konditionierverfahren** | | |
|---|---|---|---|---|---|---|---|---|
| Rohwaren: | | | Rohwaren: | | | Rohwaren: | | |
| und deren UDP₅-Gehalte vor u. nach Behandlg. (% UDP₅ am Gesamtprotein) | | | und deren UDP₅-Gehalte vor u. nach Behandlg. (% UDP₅ am Gesamtprotein) | | | und deren UDP₅-Gehalte vor u. nach Behandlg. (% UDP₅ am Gesamtprotein) | | |
| • Sojaextraktionsschrot | 20-40 | 45-55 | • Rapsexpoller | 20-30 | >50 | • Sojaextraktionsschrot | 20-40 | bis >85 |
| • Rapsextraktionsschrot | 25-40 | 45-60 | • (div. Extraktionsschrote) | 20-40 | 30-50 | • Rapsextraktionsschrot | 25-40 | " |
| • Baumwollsaatschrot | 20-40 | 45-60 | • Vollfetisoja | 10-15 | 30-40 | • Baumwollsaatschrot | 20-40 | " |
| • andere Extrakt.-schrote | - | - | | | | andere Extrakt.-schrote | - | " |
| • Rapsexpeller | 20-30 | 45-60 | | | | • Rapsexpeller | 20-30 | " |
| • (DDGS | 40-50 | 45-60) | | | | • DDGS | 40-50 | " |
| • Rinder-Kraftfutter, aus unbehand. Komponenten | | | | | | • Vollfettsoja | 10-15 | " |
| | ca. 15% | >30 | | | | • andere Saaten | - | - |
| (ggf. Post-Pelleting-Application von AS + Vit.) | | | | | | Anm: Bislang liegen nur begrenzt Analysenwerte zu UDP-Steigerungen und zur Proteinfraktionierung vor. | | |

| Anlagenkomponenten | | | Anlagenkomponenten | | | Anlagenkomponenten | | |
|---|---|---|---|---|---|---|---|---|
| ➢ Vorbehälter mit Dosierschnecke | | | ➢ Vorbehälter mit Dosierschnecke | | | ➢ Vorbehälter mit Dosierschnecke | | |
| ➢ Ökoprozessor, mit Brüden-Zuführung; | | | ➢ Durchlaufmischer mit Dampf- u. Wasserdosierung | | | ➢ Ökoprozessor, mit Brüden-Zuführung; | | |
| mit Dampf- u. Wasser-Doslersystem | | | ➢ Hydrothermischer Reaktor mit Dlrektdampfzugabe | | | mit Dampf- u. Wasser-Dosiersystem | | |
| ➢ Ringspall-Expander, mit Strukturierer | | | ➢ Trockner-Kühler | | | ➢ Überdruck-Konditionierer mit Taktschleusen | | |
| ➢ Nachkonditionier-Behälter, mit Direktdampfdosierung | | | | | | u. Direktdampf-Dosierung (domdruckgeregelt) | | |
| ➢ Trockner-Kühler | | | | | | ➢ Kühler, oder Trockner-Kühler | | |

| Verfahrensparameter: | | | Verfahrensparameter: | | | Verfahrensparameter: | | |
|---|---|---|---|---|---|---|---|---|
| Temperaturbereiche: | | | Temperaturbereiche: | | | Temperaturbereiche: | | |
| - Vorkonditionierung auf > 90°C u. ca. 17% Feuchte | | | - Vorkonditionierung auf > 90 °C u. ca. 20% Feuchte (?) | | | - Vorkonditionierung auf > 90 °C u. mind. 17% Feuchte | | |
| - Expandierung bei 120 -130 °C | | | - Langzeit-Konditionierung bei 100 °C | | | - Druckkonditionierung bei 1 - 2 bar (Ü) = 114° - 133 °C | | |
| - Nachkonditionierung bei 100 °C | | | - Trocknung auf < 10% | | | - Trocknung auf < 12% Feuchte (E.-schrote) bzw. < 10% | | |
| -Trocknung auf < 12% Feuchte (E.-schrote) bzw. < 10% | | | Prozeßdauer / Verwellzeit: Prozeßdauer/Verwellzeit: | | | bei Expeller | | |
| bei Expeller | | | - Langzeit-Prozeß im Reaktor 1 Std. und länger | | | Prozeßdauer / Verweilzeit: | | |
| Prozeßdauer / Verweflzelt: | | | | | | - 10 - 15 min. Druckkonditionier-Dauer | | |
| - HTST-Prozeß mit 10 min. Nachkonditionier-Dauer | | | | | | | | |

## Patentansprüche

1. Verfahren zum Behandeln von eiweißreichen Einzelfuttermitteln, Gesamtfuttermischungen, Futter-Prämixen und Futtermittelkomponenten für Wiederkäuer, insbesondere für Milchkühe, Mastrinder und Schafen für die Erzeugung von Wolle, bei dem das Rohmaterial einer Temperatur von mindestens 80°C mit einer Feuchte von mindestens 15 Prozent vorkonditioniert wird, **dadurch gekennzeichnet, dass** das Material nach dem Vorkonditionieren in einem Expander auf mehr als 100°C erwärmt und komprimiert wird und nach dem Austreten aus dem Expander für 3 bis 20 Minuten auf einer Temperatur von mehr als 80°C gehalten wird.

2. Verfahren nach Anspruch 1, **dadurch gekennzeichnet, dass** das Material nach dem Austreten aus dem Expander 10 Minuten auf einer Temperatur von mehr als 80°C gehalten wird.

3. Verfahren nach Anspruch 1 oder 2, **dadurch gekennzeichnet, dass** das Material nach dem Austreten aus dem Expander in einer wärmeisolierten Umschließung gehalten wird.

4. Verfahren nach einem der Ansprüche 1 bis 2, **dadurch gekennzeichnet, dass** das Material nach dem Austreten aus dem Expander in einem hydrothermischen Reaktor auf eine Temperatur von 100°C erwärmt und auf dieser Temperatur gehalten wird.

5. Verfahren nach Anspruch 4, **dadurch gekennzeichnet, dass** dem hydrothermischen Reaktor Dampf zugeführt wird.

6. Verfahren nach Anspruch 4 oder 5, **dadurch gekennzeichnet, dass** der hydrothermische Reaktor beheizt wird.

7. Verfahren nach einem der Ansprüche 1 bis 6, **dadurch gekennzeichnet, dass** das Material in Expander auf eine Temperatur von bis zu 130°C erwärmt wird.

8. Verfahren nach einem der Ansprüche 1 bis 7, **dadurch gekennzeichnet, dass** das Material anschließend pelletiert wird.

9. Verfahren nach einem der Ansprüche 1 bis 8, **dadurch gekennzeichnet, dass** das Material anschließend bis auf eine Feuchte von weniger als 12 % getrocknet wird.

10. Verfahren nach Anspruch 9, **dadurch gekennzeichnet, dass** das Material bis auf eine Feuchte von weniger als 10 % getrocknet wird.

11. Verfahren nach einem der Ansprüche 1 bis 10, **dadurch gekennzeichnet, dass** das Ausgangsmaterial Sojaextraktionsschrot enthält.

12. Verfahren nach einem der Ansprüche 1 bis 11, **dadurch gekennzeichnet, dass** das Ausgangsmaterial Rapsextraktionsschrot enthält.

13. Verfahren nach einem der Ansprüche 1 bis 12, **dadurch gekennzeichnet, dass** das Ausgangsmaterial Baumwollsaatschrot enthält.

14. Verfahren nach einem der Ansprüche 11 bis 13, **dadurch gekennzeichnet, dass** der Schrotanteil mindestens 80 % beträgt.

15. Verfahren nach einem der Ansprüche 11 bis 13, **dadurch gekennzeichnet, dass** der Schrotanteil mindestens 50 % beträgt.

16. Verfahren nach einem der Ansprüche 1 bis 15, **dadurch gekennzeichnet, dass** das Ausgangsmaterial Rapsexpeller enthält.

17. Verfahren nach einem der Ansprüche 1 bis 16, **dadurch gekennzeichnet, dass** das Ausgangsmaterial DDGS (Rinder-Kraftfutter) enthält.

18. Verfahren nach einem der Ansprüche 1 bis 17, **dadurch gekennzeichnet, dass** das Ausgangsmaterial Extraktionsschrote enthält.

19. Verfahren nach einem der Ansprüche 1 bis 18, **dadurch gekennzeichnet, dass** das Ausgangsmaterial Vollfettsoja enthält.

20. Verfahren nach einem der Ansprüche 11 bis 19, **dadurch gekennzeichnet, dass** das Ausgangsmaterial mindestens 80 % an Schrot, Rapsexpeller, DDGS und/oder Vollfettsoja enthält.

21. Verfahren zum Füttern von Wiederkäuern, insbesondere von Milchkühen, Mastrindern und Schafen, **dadurch gekennzeichnet, dass** zum Füttern ein Futtermittel verwendet wird, das nach einem der Ansprüche 1 bis 20 hergestellt ist.

## Claims

1. Process for treating high-protein single-component feeds, complete diets, feed premixes and feedstuff components for ruminants, in particular for dairy cows, beef cattle and sheep for wool production, in which process the raw material is preconditioned at a temperature of at least 80°C at a moisture level of at least 15 per cent, **characterized in that**, after preconditioning the material is, in an expander, heated to more than 100°C and compressed and, after leaving the expander, held for 3 to 20 minutes at a temperature of more than 80°C.

2. Process according to Claim 1, **characterized in that** the material, after leaving the expander, is held for 10 minutes at a temperature of more than 80°C.

3. Process according to Claim 1 or 2, **characterized in that**, after leaving the expander, the material is held in a heat-insulated enclosure.

4. Process according to Claim 1 to 2, **characterized in that** the material, after leaving the expander, is, in a hydrothermal reactor, heated at a temperature of 100°C and held at this temperature.

5. Process according to Claim 4, **characterized in that** steam is supplied to the hydrothermal reactor.

6. Process according to Claim 4 or 5, **characterized in that** the hydrothermal reactor is heated.

7. Process according to one of Claims 1 to 6, **characterized in that** the material is heated in the expander at a temperature of up to 130°C.

8. Process according to any of Claims 1 to 7, **characterized in that** the material is subsequently pelleted.

9. Process according to any of Claims 1 to 8, **characterized in that** the material is subsequently dried to a moisture level of less than 12%.

10. Process according to Claim 9, **characterized in that** the material is dried to a moisture level of less than 10%.

11. Process according to one of Claims 1 to 10, **characterized in that** the starting material contains extracted soya meal.

12. Process according to one of Claims 1 to 11, **characterized in that** the starting material contains extracted rape meal.

13. Process according to one of Claims 1 to 12, **characterized in that** the starting material contains extracted cottonseed meal.

14. Process according to one of Claims 11 to 13, **characterized in that** the meal portion amounts to at least 80%.

15. Process according to one of Claims 11 to 13, **characterized in that** the meal portion amounts to at least 50%.

16. Process according to one of Claims 1 to 15, **characterized in that** the starting material contains rape expeller cake.

17. Process according to one of Claims 1 to 16, **characterized in that** the starting material contains DDGS (concentrate for cattle).

18. Process according to one of Claims 1 to 17, **characterized in that** the starting material contains extracted meals.

19. Process according to one of Claims 1 to 18, **characterized in that** the starting material contains full-fat soya.

20. Process according to one of Claims 11 to 19, **characterized in that** the starting material contains at least 80% meal, rape expeller cake, DDGS and/or full-fat soya.

21. Method of feeding ruminants, in particular dairy cows, beef cattle and sheep, **characterized in that** feeding is accomplished using a feedstuff produced by one of Claims 1 to 20.

## Revendications

1. Procédé de traitement de différents fourrages, de mélanges fourragers, de pré-mélanges fourragers et de composants de fourrages riches en protéines pour des ruminants, notamment pour des vaches laitières, des bovins à l'engrais et des ovins élevés pour leur laine, où le produit brut est pré-conditionné à une température de 80°C minimum avec une humidité d'au moins 15 %, **caractérisé en ce que** le produit est après pré-conditionnement chauffé à plus de 100°C et comprimé dans un expanseur, et maintenu pendant 3 à 20 minutes à une température de plus de 80°C après sa sortie de l'expanseur.

2. Procédé selon la revendication 1, **caractérisé en ce que** le produit est maintenu pendant 10 minutes à une température de plus de 80°C après sa sortie de l'expanseur.

3. Procédé selon la revendication 1 ou 2, **caractérisé en ce que** le produit est maintenu dans une enceinte à isolation thermique après sa sortie de l'expanseur.

4. Procédé selon l'une des revendications 1 ou 2, **caractérisé en ce que** le produit est chauffé à une température de 100°C dans un réacteur hydrothermique après sa sortie de l'expanseur, et maintenu à cette température.

5. Procédé selon la revendication 4, **caractérisé en ce que** de la vapeur alimente le réacteur hydrothermique.

6. Procédé selon la revendication 4 ou la revendication 5, **caractérisé en ce que** le réacteur hydrothermique est chauffé.

7. Procédé selon l'une des revendications 1 à 6, **caractérisé en ce que** le produit est chauffé à une température pouvant atteindre 130°C dans l'expanseur.

8. Procédé selon l'une des revendications 1 à 7, **caractérisé en ce que** le produit est granulé ensuite.

9. Procédé selon l'une des revendications 1 à 8, **caractérisé en ce que** le produit est séché ensuite jusqu'à ce que son humidité devienne inférieure à 12 %.

10. Procédé selon la revendication 9, **caractérisé en ce que** le produit est séché jusqu'à ce que son humidité devienne inférieure à 10 %.

11. Procédé selon l'une des revendications 1 à 10, **caractérisé en ce que** le produit initial contient du tourteau d'extraction de soja.

12. Procédé selon l'une des revendications 1 à 11, **caractérisé en ce que** le produit initial contient du tourteau d'extraction de colza.

13. Procédé selon l'une des revendications 1 à 12, **caractérisé en ce que** le produit initial contient de la mouture de graines de coton.

14. Procédé selon l'une des revendications 11 à 13, **caractérisé en ce que** la part de mouture est d'au moins 80 %.

15. Procédé selon l'une des revendications 11 à 13, **caractérisé en ce que** la part de mouture est d'au moins 50 %.

16. Procédé selon l'une des revendications 1 à 15, **caractérisé en ce que** le produit initial contient du tourteau de pression de colza.

17. Procédé selon l'une des revendications 1 à 16, **caractérisé en ce que** le produit initial contient des DDGS (aliment concentré pour bovins).

18. Procédé selon l'une des revendications 1 à 17, **caractérisé en ce que** le produit initial contient des tourteaux d'extraction.

19. Procédé selon l'une des revendications 1 à 18, **caractérisé en ce que** le produit initial contient du soja gras.

20. Procédé selon l'une des revendications 11 à 19, **caractérisé en ce que** le produit initial contient au moins 80 % de mouture, de tourteau de pression de colza, de DDGS et/ou de soja gras.

21. Procédé d'alimentation de ruminants, notamment de vaches laitières, de bovins à l'engrais et d'ovins, **caractérisé en ce qu'**un fourrage produit selon l'une des revendications 1 à 20 est utilisé dans l'alimentation.
